# EUROPÄISCHE PATENTSCHRIFT

(11) **EP 0 934 845 B1**
(45) Veröffentlichungstag und Bekanntmachung des Hinweises auf die Patenterteilung: **12.10.2005**
(21) Anmeldenummer: 99100625.5
(22) Anmeldetag: 14.01.1999
(51) Int. Cl.: B60K 31/00

(54) **Abstandsbezogenes Fahrgeschwindigkeitsregelsystem**
Cruise control system dependent on vehicle spacing
Régulateur de vitesse avec régulation à distance

(30) Priorität: 06.02.1998 DE 19804641
(43) Veröffentlichungstag der Anmeldung: 11.08.1999
(73) Patentinhaber: Bayerische Motoren Werke Aktiengesellschaft, 80788 München (DE)
(72) Erfinder: Prestl, Willibald, Dr., 82223 Eichenau (DE); Steinle, Joachim, Dr., 80993 München (DE); Tschernoster, Oliver, 80939 München (DE)

(56) Entgegenhaltungen:
- DE-A- 19 544 923
- US-A- 5 014 200

## Beschreibung

Die Erfindung bezieht sich auf ein abstandsbezogenes Fahrgeschwindigkeitsregelsystem nach dem Oberbegriff des Patentanspruchs 1.

Ein derartiges Fahrgeschwindigkeitsregelsystem ist beispielsweise aus der US 5,014,200 bekannt. Derartige bekannte adaptive Fahrgeschwindigkeitsregelysteme (ACC = adaptive cruise control) bestehen insbesondere aus zwei Komponenten:
1. Aus einem Fahrgeschwindigkeitsregler, der grundsätzlich eine vom Fahrer vorgegebene Geschwindigkeit konstant hält
2. Aus einem Sensorsystem zur Erfassung des Abstands zum jeweils vorausfahrenden Fahrzeug.

Bei abstandsbezogenen adaptiven Fahrgeschwindigkeitsregelsystemen wird grundsätzlich eine vorgegebene Geschwindigkeit konstantgehalten, bis ein vorgegebener Mindestabstand zum vorausfahrenden Fahrzeug erreicht bzw. unterschritten wird. Bei Erreichen oder Unterschreiten dieses vorgegebenen Mindestabstandes findet eine Geschwindigkeitsregelung derart statt, daß der vorgegebene Mindestabstand (Folgeabstand) in Form einer abstandsgeregelten Folgefahrt eingehalten wird.

Weiterhin sind abstandsbezogene Fahrgeschwindigkeitsregelsysteme bekannt, die ein automatisch abstandsgeregeltes Anhalten hinter vorausfahrenden Fahrzeugen bis in den Stand umfassen. Hierbei wird mit abnehmenden Geschwindigkeitswerten eine zunehmende Verzögerungsfähigkeit zugelassen. Unter dem Begriff Verzögerungsfähigkeit wird im folgenden die maximale vom Fahrgeschwindigkeitsregelsystem angeforderte Verzögerung verstanden. Nicht in allen Fahrzeugen sind Möglichkeiten gegeben, ein auf diese Weise automatisch zum Stillstand gebrachtes Fahrzeug zuverlässig durch ein selbsttätig wirkendes Bremssystem im Stand zu halten. Hierbei können sicherheitskritische Situationen auftreten, wenn ein Fahrer ein automatisch zum Stillstand gebrachtes Fahrzeug verläßt, ohne eine manuell zu aktivierende Bremsvorrichtung zu betätigen. Auch könnte ein automatisches Anhalten bis zum Stand einen Fahrer zur Annahme verleiten, daß das adaptive Fahrgeschwindigkeitsregelsystem auch in kritischen Situationen durch Bremseingriffe stets eine ausreichende und vollautomatische Hilfestellung bietet. Derartige abstandsbezogene adaptive Fahrgeschwindigkeitsregelsysteme sind jedoch als Komfortsysteme zu verstehen, wobei der Fahrer weiterhin als überwachende Instanz uneingeschränkt verantwortlich bleiben soll.

Es ist daher Aufgabe der Erfindung, ein abstandsbezogenes Fahrgeschwindigkeitsregelsystem derart zu verbessern, daß dem Fahrer die Funktionsgrenzen des Systems stets bewußt sind und er die Funktionsgrenzen insbesondere in gefahrlosen Situationen erfahren kann.

Diese Aufgabe wird durch die Merkmale des Patentanspruchs 1 gelöst. Eine vorteilhafte Weiterbildung der Erfindung ist der Gegenstand des Unteranspruchs.

Im Gegensatz zum üblichen Vorgehen, die Verzögerungsfähigkeit mit abnehmenden Geschwindigkeitswerten zu erhöhen, wird die Verzögerungsfähigkeit, die üblicherweise durch die Verbindung des Fahrgeschwindigkeitsregelsystems mit einem aktiv ansteuerbaren Bremssystem realisiert wird, beginnend bei einem vorgegebenen niedrigen Geschwindigkeitswert, vorzugsweise kontinuierlich, mit weiter abfallender Geschwindigkeit auf Null bzw. auf das Motorschleppmoment reduziert. Die Abnahme der Verzögerungsfähigkeit zwingt den Fahrer intuitiv bei niedrigen Geschwindigkeiten die Fahrzeugführung selbst zu übernehmen.

Damit diese Übernahme der Fahrzeugführung rechtzeitig und in unkritischen Fahrsituationen erfolgen kann, wird vorzugsweise vor Einleiten der Reduzierung der Verzögerungsfähigkeit der vorgegebene Folgeabstand zunächst erhöht. Vorzugsweise nimmt die Erhöhung des Folgeabstands dabei mit zunehmender negativer Relativgeschwindigkeit zum vorausfahrenden Fahrzeug zu.

Durch das Sicherstellen der eigenverantwortlichen Fahrzeugführung des Fahrers in vollem Umfang wird mittels des erfindungsgemäßen Fahrgeschwindigkeitsregelsystems die Sicherheit erhöht.

In der Zeichnung ist ein Ausführungsbeispiel der Erfindung dargestellt. Es zeigen
- Fig. 1: unterschiedliche Vorgaben des Folgeabstands in Abhängigkeit von der Fahrzeuggeschwindigkeit und
- Fig. 2: einen Verlauf der Geschwindigkeit und der Zeitlücke zum vorausfahrenden Fahrzeug bei reduzierter Verzögerungsfähigkeit im Vergleich mit dem Verlauf der Geschwindigkeit und der Zeitlücke bei nicht reduzierter Verzögerungsfähigkeit.

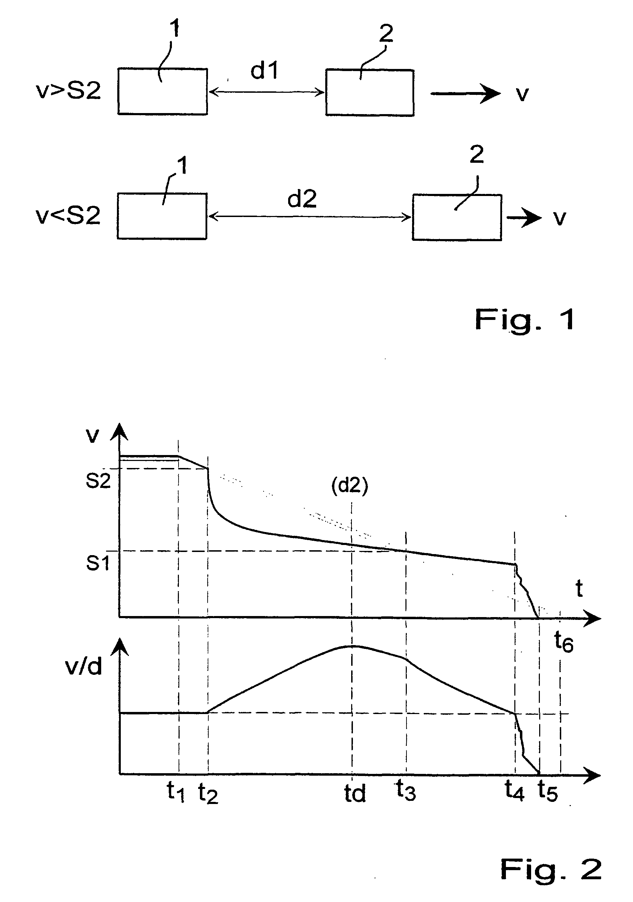

In Fig. 1 ist schematisch eine abstandsgeregelte Folgefahrt eines Fahrzeuges 1 mit dem erfindungsgemäßen Fahrgeschwindigkeitsregelsystem hinter einem vorausfahrenden Fahrzeug 2 dargestellt. Das Fahrzeug 2 bewegt sich jeweils mit einer Geschwindigkeit v in die durch Pfeile dargestellte Richtung. In der oberen Darstellung der Fig. 1 ist eine Folgefahrt mit einem vorgegebenen Folgeabstand d1 für den ersten und üblichen Fall dargestellt, wenn die Geschwindigkeit v größer als eine vorgegebene Schwelle S2 ist. In der unteren Darstellung der Fig. 1 ist eine Folgefahrt für den zweiten Fall dargestellt, bei dem die Geschwindigkeit v des vorausfahrenden Fahrzeugs 2 die Schwelle S2, z. B. eine typische Stadtverkehrsgeschwindigkeit, unterschritten hat. Ab dem Zeitpunkt des Unterschreitens der Schwelle S2 wird der Folgeabstand d1 zunächst kontinuierlich vergrößert, insbesondere mit dem Ziel möglichst den erhöhten Folgeabstand d2 zu erreichen, bevor die Schwelle S1 (Fig. 2) unterschritten wird.

Unterschreitet die Fahrzeuggeschwindigkeit v aufgrund des langsamer werdenden Fahrzeuges 2 die Schwelle S1 (Fig. 2), die unterhalb der Schwelle S2 liegt, wird die abstandsgeregelte Folgefahrt in dem Sinne abgeschaltet, daß unabhängig vom Folgeabstand die Verzögerungsfähigkeit mit weiter abnehmender Fahrzeuggeschwindigkeit v reduziert wird - auch dann, wenn der erhöhte Folgeabstand d2 noch nicht erreicht wurde. Hierdurch wird der Fahrer in zunehmenden Maße darauf aufmerksam gemacht, daß er die Bremssteuerung des Fahrzeugs zu übernehmen hat.

In Fig. 2 oben ist der Verlauf der Fahrzeuggeschwindigkeit v über der Zeit t aufgetragen. In Fig. 2 unten ist die Zeitlücke v/d zum vorausfahrenden Fahrzeug 2 im Sinne des Verhältnisses der momentanen Geschwindigkeit v zum momentanen Folgeabstand d über der Zeit t aufgetragen. Zum Zeitpunkt t1 beginnt die Fahrzeuggeschwindigkeit v des vorausfahrenden und damit des nachfolgenden Fahrzeuges 1 abzunehmen. Wie durch die dünne Linie dargestellt, würde bei einem System nach dem Stand der Technik, wenn das vorausfahrende Fahrzeug kontinuierlich bis zum Stillstand langsamer wird, auch die Geschwindigkeit v des folgenden Fahrzeuges mit konstanter Zeitlücke v/d kontinuierlich bis zum Stillstand abnehmen.

Erfindungsgemäß wird jedoch zum Zeitpunkt t2, wenn die Geschwindigkeit v die vorgegebene Schwelle S2 unterschreitet, der Folgeabstand d1 zunächst auf den Folgeabstand d2, der im dargestellten Beispiel zum Zeitpunkt td erreicht wird, vergrößert. D.h. die Geschwindigkeit v nimmt momentan stärker als beim Stand der Technik ab bzw. im Rahmen der vorgegebenen Verzögerungsfähigkeit wird momentan stärker verzögert. Die Zeitlücke v/d nimmt gleichzeitig zu und erreicht zum Zeitpunkt td ihr Maximum.

Nach dem Zeitpunkt td nimmt die Geschwindigkeit v weiter ab und sinkt zum Zeitpunkt t3 unter die vorgegebene Schwelle S1. Anschließend wird die Verzögerungsfähigkeit, z. B. durch Verminderung der Bremseingriffe, mit weiter abnehmender Geschwindigkeit v reduziert. Dies bedeutet im Beispiel nach Fig. 2, daß die Geschwindigkeit v zwischen den Zeitpunkten t3 und t4 immer weniger stark abnimmt. Ab dem Zeitpunkt t3, wenn die Zeitlücke v/d in spürbarem Maß wieder kleiner wird, erkennt der Fahrer entsprechend der gewünschten Wirkung der Erfindung, daß nunmehr die Funktionsgrenzen des Fahrgeschwindigkeitsregelsystems erreicht sind, da der Folgeabstand durch die Reduzierung der Geschwindigkeitsabnahme wieder geringer wird, und daß er demnächst eingreifen bzw. übernehmen muß. Im dargestellten Beispiel übernimmt der Fahrer die Fahrzeugführung zum Zeitpunkt t4 und kommt zum Zeitpunkt 5 durch einen eigenen Bremseingriff rechtzeitig zum Stillstand. Das vorausfahrende Fahrzeug 2 kommt zum Zeitpunkt t6 zum Stillstand.

Ergänzend wird daraufhingewiesen, daß in der Praxis die Schwelle S1 auch vor Erreichen des erhöhten Folgeabstandes d2 unterschritten werden kann. In diesem Falle wird erfindungsgemäß vorzugsweise unabhängig vom Erreichen dieses Folgeabstandes d2 die Verzögerungsfähigkeit reduziert. Andernfalls könnte auch das Erreichen des erhöhten Folgeabstandes d2 und/oder das Unterschreiten der Schwelle S1 als Auslösekriterien zum Reduzieren der Verzögerungsfähigkeit definiert werden.

## Patentansprüche

1. Abstandsbezogenes Fahrgeschwindigkeitsregelsystem für Kraftfahrzeuge mit einem elektronischen Steuergerät, **dadurch gekennzeichnet, daß** mittels des Steuergeräts bei abstandsgeregelter Folgefahrt mit vorgegebenem Folgeabstand zum vorausfahrenden Fahrzeug (2), wenn die Geschwindigkeit (v) eine vorgegebene erste Schwelle (S1) unterschreitet im Falle einer weiteren Abnahme der Geschwindigkeit (v) des vorausfahrenden Fahrzeuges (2) die Verzögerungsfähigkeit unabhängig vom Einhalten eines Folgeabstandes reduziert wird.

2. Abstandsbezogenes Fahrgeschwindigkeitsregelsystem nach Anspruch 1, **dadurch gekennzeichnet, daß** der momentan vorgegebene Folgeabstand (d1) zunächst erhöht wird, wenn die Geschwindigkeit (v) eine vorgegebene zweite Schwelle (S2), die größer als die erste Schwelle (S1) ist, unterschreitet.

## Claims

1. A spacing-dependent cruise control system for motor vehicles comprising an electronic control unit, **characterised in that** when driving with controlled spacing and at a set distance from the vehicle (2) in front, and when the speed (v) falls below a set first threshold (S1) and a further reduction in speed (v) is made by the vehicle (2) in front, the control unit reduces the deceleration capacity whether or not the spacing from the vehicle in front is maintained.

2. A spacing-dependent cruise control system according to claim 1, **characterised in that** the instantaneously set spacing (d1) is first increased when the speed (v) falls below a set second threshold (S2) which is greater than the first threshold (S1).

## Revendications

1. Système de régulation de vitesse en fonction de la distance pour véhicules automobiles comprenant un appareil de commande électronique,
**caractérisé en ce qu'**
indépendamment du respect d'une distance entre deux véhicules, dans le cas d'une succession de véhicules régulée en fonction de la distance avec distance entre deux véhicules définie par rapport au véhicule (2) précédent, l'appareil de commande réduit la capacité de retardement lorsque la vitesse (v) passe sous un premier seuil (S1) défini dans le cas d'une autre diminution de la vitesse (v) du véhicule (2) précédent.

2. Système de régulation de vitesse en fonction de la distance selon la revendication 1,
**caractérisé en ce que**
la distance entre deux véhicules (d1) momentanément définie est d'abord augmentée lorsque la vitesse (v) passe sous un deuxième seuil (S2) défini supérieur au seuil (S1).
